# DEMANDE DE BREVET EUROPEEN

(11) **EP 2 963 481 A1**
(43) Date de publication de la demande: **06.01.2016**
(21) Numéro de dépôt: 15175294.6
(22) Date de dépôt: 03.07.2015
(51) Int. Cl.: G02C 5/14, G02C 5/22, G02C 5/16

(54) **CHARNIÈRE D'UNE MONTURE DE LUNETTES**

(30) Priorité: 04.07.2014 FR 1456435
(71) Demandeur: Oxibis Group, 39400 Morbier (FR)
(72) Inventeur: PANISSET, Claude, 25000 BESANCON (FR)
(74) Mandataire: Novagraaf Technologies

(57) **Abrégé**

Une charnière (1) reliant une façade (2, 3) à une branche (4) comporte un premier et un deuxième élément (11, 12) formant respectivement un tenon (11) et au moins une partie de la branche (12) ou inversement. Le premier élément (11) a une extrémité de la forme d'une lame (112) qui présente un chant d'appui (1120) et un bord d'extrémité (1121) orienté obliquement ou à angle droit. Le premier élément (11) comportant en outre des moyens d'accrochage (113). Le deuxième élément (12) comporte une rainure (123) dont la largeur est ajustée à l'épaisseur de la lame (112). Une agrafe (13) élastique comportant une traverse (130) se logeant dans les moyens d'accrochage (113), la traverse (130) tendant à plaquer le premier élément (11) dans la rainure (123), le premier élément (11) et le deuxième élément (12) étant aptes à pivoter l'un par rapport à l'autre entre une position d'ouverture et une position de fermeture.

## Description

### Domaine technique

La présente invention se rapporte à une charnière de monture de lunettes, la charnière reliant une façade à une branche.

### Etat de la technique

Les lunettes comportent pour la plupart une façade et deux branches, chaque branche étant articulée sur la façade par une charnière. La charnière comporte souvent un premier et un deuxième élément formant respectivement un tenon et au moins une partie de la branche. Le tenon est relié de manière fixe à la façade, tandis que le deuxième élément peut être issu directement de la branche ou rapporté de manière fixe sur celle-ci.

Il est fréquent de prévoir que la position de la branche soit stabilisée de manière élastique d'une part dans la position d'ouverture, dans laquelle elle est sensiblement à angle droit avec la façade et la position de fermeture, dans laquelle elle est sensiblement parallèle à celle-ci. La position d'ouverture est utilisée lorsque les lunettes sont portées par son utilisateur, tandis que la position de fermeture permet de les ranger sans qu'elles soient encombrantes.

Le document FR 2 690 760 A1 montre un exemple d'une charnière permettant ces fonctions. Le tenon de cette charnière comporte une fourche avec deux ailes, la fourche présentant deux angles saillants sensiblement droits. La branche comporte à son extrémité une forme creuse en V complémentaire aux angles saillant. La branche comporte en outre une pièce de liaison comportant à une première extrémité une boule qui se loge en prise entre les ailes du tenon. La deuxième extrémité de la tige de liaison est logée dans un trou longitudinal de la branche et reçoit la poussée d'un ressort hélicoïdal qui l'entoure. Ainsi, la branche est plaquée contre le tenon et a deux position stabilisées dans lesquelles sa forme creuse reçoit l'un des deux angles saillants.

Bien qu'une telle charnière soit pleinement fonctionnelle, elle est relativement complexe à assembler et comporte de nombreuses petites pièces.

L'invention vise à fournir une charnière de lunettes permettant d'obtenir des positions stabilisées de la branche en comportant peu de pièces et en étant simple à assembler.

### Description de l'invention

Avec ces objectifs en vue, l'invention a pour objet une charnière d'une monture de lunettes, la charnière reliant une façade à une branche et comportant un premier et un deuxième élément formant respectivement un tenon et au moins une partie de la branche ou inversement, caractérisée en ce que le premier élément a une extrémité de la forme d'une lame qui présente un chant d'appui et un bord d'extrémité orienté obliquement ou à angle droit par rapport au chant d'appui, le premier élément comportant en outre des moyens d'accrochage, le deuxième élément comportant une rainure dont la largeur est ajustée à l'épaisseur de la lame, la charnière comportant en outre une agrafe élastique, l'agrafe comportant une traverse se logeant dans les moyens d'accrochage et en outre au moins un bras ancré dans le deuxième élément, la traverse tendant à plaquer le premier élément dans la rainure, le premier élément et le deuxième élément étant aptes à pivoter l'un par rapport à l'autre entre une position d'ouverture dans laquelle le chant est plaqué dans la rainure et une position de fermeture dans laquelle le bord d'extrémité est plaqué dans la rainure.

On réalise ainsi une charnière de manière très simple. En effet, une telle charnière demande un nombre très faible de pièces : le premier et le deuxième élément, ainsi que l'agrafe. L'agrafe est ancrée dans le deuxième élément et forme une articulation avec les moyens d'accrochage du premier élément. La traverse pivote dans les moyens d'accrochage. De plus, le premier élément est guidé dans la rainure en y étant maintenu en permanence de manière élastique par l'agrafe. Deux positions stables sont déterminées d'une part par le chant appuyé dans la rainure et d'autre part par le bord d'extrémité. Ainsi les fonctions souhaitées de la charnière sont réalisées.

Selon une disposition constructive, les bras de l'agrafe sont au nombre de deux et forment un U avec la traverse, les bras s'étendant de part et d'autre du premier élément. Les forces d'appui conférées par les bras à la traverse sont ainsi équilibrées de part et d'autre de la lame. Les bras servent aussi de guidage à la lame en empêchant qu'elle s'écarte de la position en regard de la rainure.

Selon un premier mode de réalisation, au moins l'un des bras comporte un retour pour former une pince, le retour s'étendant le long d'un côté extérieur du deuxième élément opposé à un côté intérieur le long duquel le premier bras s'étend. Le retour et le bras s'étendent de part et d'autre du deuxième élément, l'un servant d'appui pour que l'autre serre le premier élément.

Selon une disposition particulière, le deuxième élément peut comporter un trou débouchant dans lequel se loge un arc réalisant la jonction entre le retour et le bras. La pince est ainsi parfaitement positionnée.

Selon un perfectionnement, chaque bras comporte un retour, le trou débouchant étant commun pour les deux arcs. L'agrafe est de forme symétrique et l'ancrage est réparti de manière équilibrée.

Alternativement, chaque bras comporte un retour, le deuxième élément comportant deux trous débouchants distincts pour le passage des arcs respectifs.

Selon un autre perfectionnement le deuxième élément comporte une saignée sur le côté extérieur dans laquelle le retour est logé au moins partiellement. Ainsi le ou les retours ne font que très peu saillie du côté extérieur. De plus la saignée sert de guidage pour garantir l'orientation de l'agrafe en toute circonstance.

Dans le cas d'un seul trou débouchant pour les deux pinces, les retours des deux bras se logent par exemple dans la même saignée.

Dans le cas de deux trous débouchants, le deuxième élément comporte par exemple deux saignées distinctes pour recevoir respectivement les retours des deux bras.

Selon un deuxième mode de réalisation, le bras s'étend dans un logement longitudinal du deuxième élément. Ainsi, l'ancrage de l'agrafe est entièrement intégré dans le deuxième élément et n'est pas visible. Le logement peut aussi accueillir deux bras parallèlement l'un à l'autre.

Dans ce cas, le bras est fixé par exemple dans le logement par brasure, soudure, collage ou sertissage.

Pour tous les modes de réalisation, les moyens d'accrochage peuvent comprendre une encoche débouchant à l'opposé du chant. Le fait que l'encoche soit débouchante permet d'introduire la traverse dans l'encoche. La traverse vient alors en appui dans l'encoche pour appliquer le premier élément dans la rainure. L'encoche est par exemple orientée vers la jonction entre le chant et le bord d'extrémité de telle sorte que, quel que soit la position de la branche entre la position d'ouverture et la position de fermeture, la traverse n'ait pas tendance à sortir de l'encoche.

L'agrafe est réalisée par exemple par un fil de section constante. Elle peut ainsi être réalisée facilement par pliage du fil.

La section du fil est par exemple circulaire, polygonale, carrée, oblongue ou elliptique. On peut ainsi obtenir des effets esthétiques différents, tout en conservant la même fonctionnalité.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue en perspective et en éclaté d'une partie de lunettes comportant une charnière selon un premier mode de réalisation de l'invention ;
- la figure 2 est une vue en perspective de la charnière de la figure 1 assemblée et en position de fermeture ;
- la figure 3 est une vue de côté d'une agrafe de la charnière de la figure 1 ;
- la figure 4 est une vue en perspective de la charnière de la figure 2 dans une position intermédiaire entre une position d'ouverture et une position de fermeture ;
- les figures 5 à 9 montrent différentes phases lors de l'assemblage d'une charnière selon la figure 2 ;
- les figures 10 et 11 sont des vues en perspective sous deux angles différents d'une charnière selon une variante du premier mode de réalisation de l'invention ;
- les figures 12 et 13 sont des vues en perspective sous deux angles différents d'une charnière selon un deuxième mode de réalisation de l'invention ;
- les figures 14 et 15 sont des vues en perspective sous deux angles différents d'une charnière selon une première variante du deuxième mode de réalisation de l'invention ;
- les figures 16 et 17 sont des vues en perspective sous deux angles différents d'une charnière selon une deuxième varient du deuxième mode de réalisation de l'invention.

### DESCRIPTION DETAILLEE

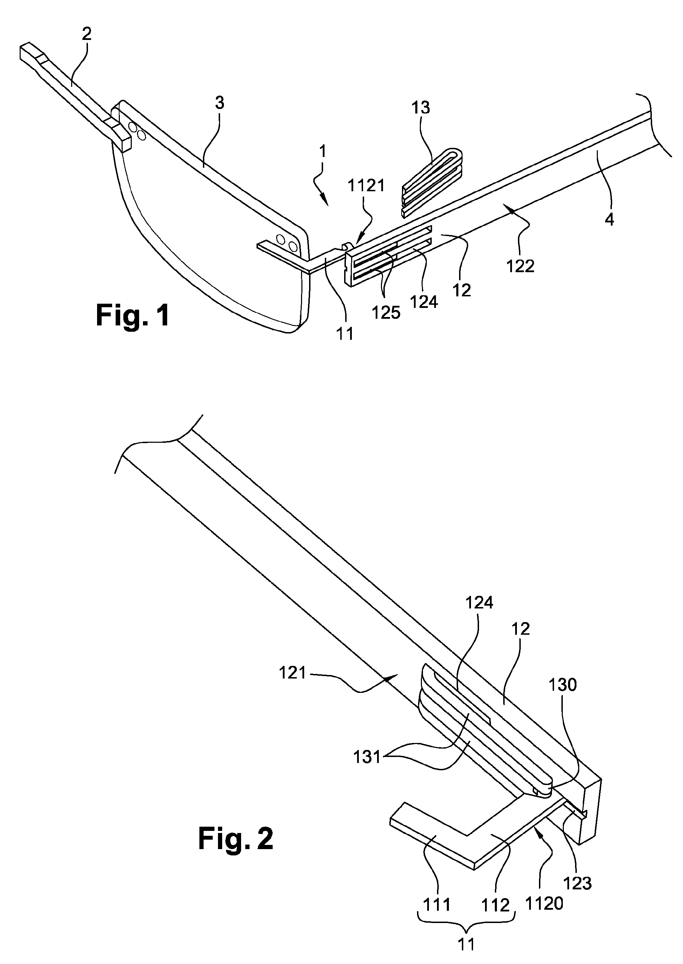

Une monture de lunettes est montrée partiellement sur la figure 1. Cette monture comporte une charnière 1 selon un premier mode de réalisation de l'invention, montré sur les figures 1 à 9. La monture comporte un pont 2 pour relier deux verres 3 dont un seul est représenté de manière à former une façade, deux branches 4 dont une seule est représentée en partie, chaque branche 4 étant reliée à l'un des verres 3 par l'intermédiaire de la charnière 1 selon l'invention.

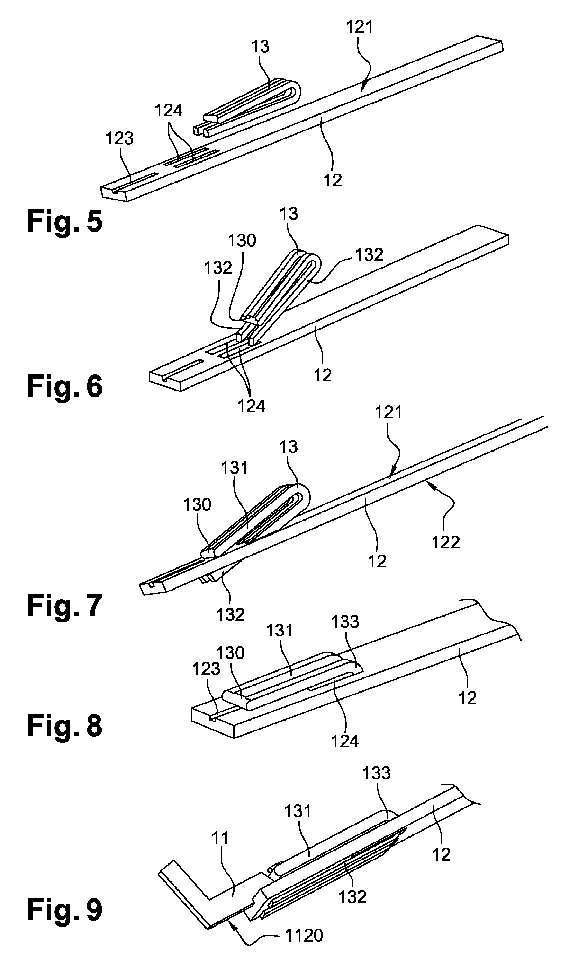

La charnière 1 comporte un premier et un deuxième élément 11, 12 formant respectivement un tenon 11 et une partie de la branche 12. Le tenon 11 est en forme d'équerre dont une première partie 111 est fixée sur le verre 3 par des moyens non détaillés ici, une deuxième partie 112 dont une extrémité a la forme d'une lame. La lame 112 présente un chant d'appui 1120 et un bord d'extrémité 1121 orienté pratiquement à angle droit par rapport au chant d'appui 1120. Ainsi, le chant d'appui 1120 est orienté perpendiculairement à la façade, dans un plan qui est sensiblement vertical lorsque la monture est portée par un utilisateur. Le deuxième élément 12 comporte sur un côté intérieur 121 une rainure 123 dont la largeur est ajustée à l'épaisseur de la lame 112. Le deuxième élément 12 se débat entre une position d'ouverture dans laquelle le chant d'appui 1120 est plaqué dans la rainure 123, tel que montrée sur la figure 9, et une position de fermeture dans laquelle le bord d'extrémité 1121 est plaqué dans la rainure 123, tel que montré sur la figure 2.

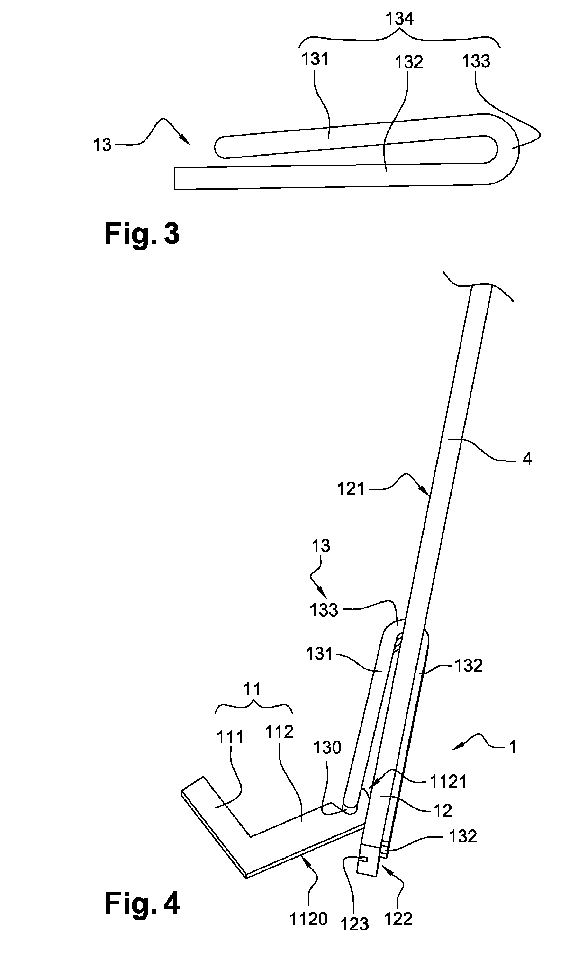

La charnière 1 comporte en outre une agrafe 13 élastique pour relier de manière articulée le tenon 11 et le deuxième élément 12. L'agrafe 13 telle que montrée en particulier sur les figures 3 et 5, comporte une traverse 130, deux bras 131 parallèles l'un à l'autre et reliés à leur extrémité par la traverse 130 pour former un U avec eux et un retour 132 pour chacun des bras 131, le bras 131 et le retour 132 correspond étant reliés par un arc 133 pour former une pince 134. Chaque retour 132 s'étend sensiblement en regard du retour 132 correspondant. L'agrafe 13 est réalisée par exemple par un fil de section constante.

Le deuxième élément 12 comporte deux trous débouchants 124 reliant le côté intérieur 121 et un côté extérieur 122 opposé au côté intérieur 121. Le côté extérieur 122 comporte deux saignées 125 parallèles dans le prolongement des trous débouchants 124 et orientés dans la direction principale de la branche vers l'extrémité proche de la façade.

Le tenon 11 comporte des moyens d'accrochage sous la forme d'une encoche 113 débouchant à l'opposé du chant d'appui 1120. L'encoche 113 est orientée également de manière oblique par rapport au bord d'extrémité 1121 avec une tendance vers l'angle reliant le chant d'appui 1120 et le bord d'extrémité 1121.

En référence aux figures 5 à 9, le montage de la charnière 1 est le suivant. On présente l'agrafe 13 du côté intérieur 121 du deuxième élément 12, les retours 132 au plus près de l'élément. Les retours 132 sont introduits dans les trous débouchants 124, comme le montre la figure 6, pour les traverser, comme le montre la figure 7. Les retours 132 s'étendent alors du côté extérieur 122 et les bras 131 le long du côté intérieur 121, comme le montre la figure 8. Ensuite, en exerçant une traction sur les bras 131 à leur extrémité près de la traverse 130 pour mettre l'agrafe 13 sous tension, on introduit le tenon 11 dans la rainure 123 en plaçant la traverse 130 dans l'encoche 113 puis on relâche les bras 131 qui plaquent alors le tenon 11 contre le deuxième élément 12 en appui dans la rainure 123, les bras 131 s'étendant de part et d'autre du tenon 11. La charnière 1 est alors opérationnelle.

Le tenon 11 est maintenu avec le chant d'appui 1120 dans la rainure 123 en position ouverte, comme montré sur la figure 9. Par une flexion imposée sur la branche 4, celle-ci pivote comme le montre une position intermédiaire sur la figure 4, le tenon 11 restant toujours dans la rainure 123 en appui sur l'angle entre le chant d'appui 1120 et le bord d'extrémité 1121. L'agrafe 13 est sollicitée en écartant les bras 131 du côté intérieur 121. En poursuivant le pivotement, on atteint la position de fermeture qui est maintenue élastiquement par le fait que le bord d'extrémité 1121 est en appui dans la rainure 123, comme montré sur la figure 2.

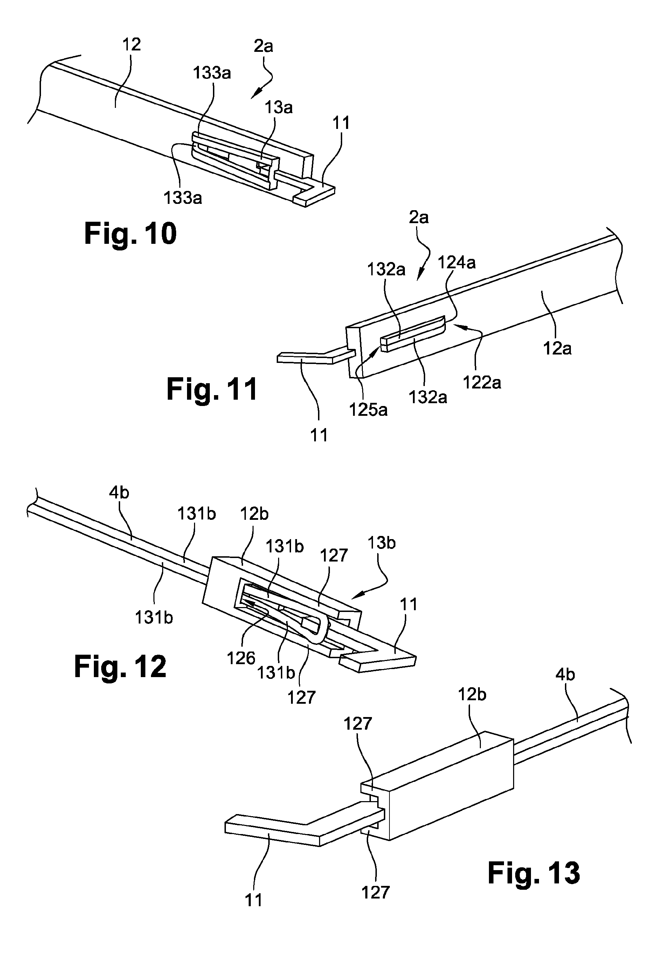

Dans une variante du premier mode de réalisation, montré sur les figures 10 et 11, la charnière 1a se distingue du premier mode de réalisation par le fait que le trou débouchant 124a du deuxième élément 12a est commun pour les deux arcs 133a et que la saignée 125a sur le côté extérieur 122a est commun aux deux retours 132a de l'agrafe 13a. Le maintien du tenon 12 est identique au premier mode de réalisation décrit précédemment.

Dans une deuxième mode de réalisation, montré sur les figures 12 et 13 en position d'ouverture, la charnière 1b se distingue du premier mode de réalisation par le fait que l'agrafe 13b ne comporte pas de retours, mais les bras 131b sont plus longs et se logent dans des logements 126 qui s'étendent dans le deuxième élément 12 dans la même direction que la branche. Les bras 131 se prolongent au-delà du logement et forment directement la branche 4b. Les bras 131 b sont fixés dans le logement 126 par brasure, soudure, collage ou sertissage. Le deuxième élément 12b comporte en outre deux ailes 127 qui enserrent les bras 131 b, de manière à les rendre moins visibles.

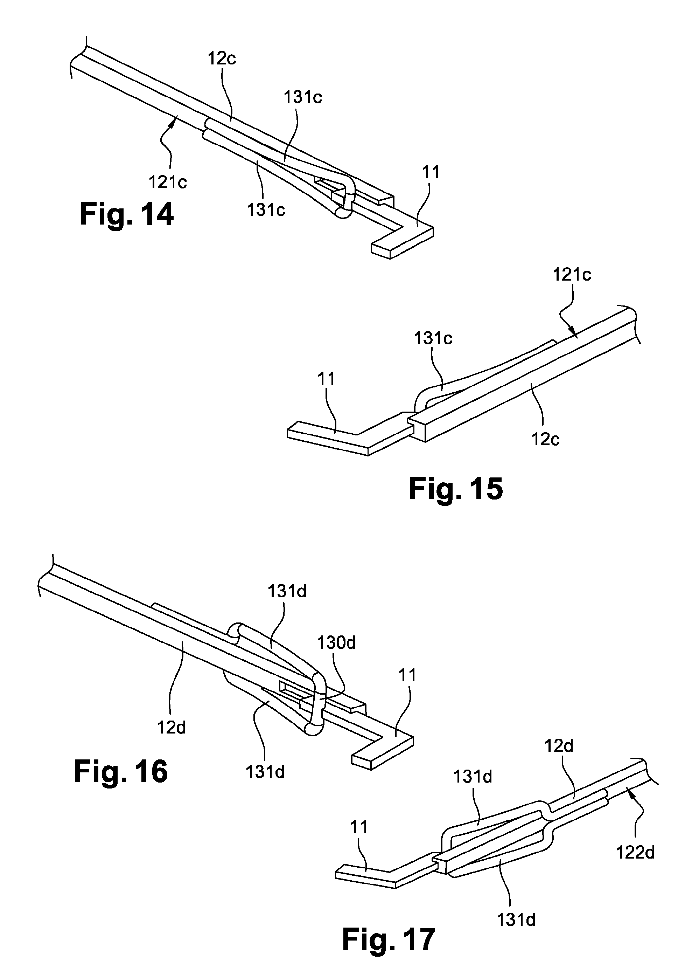

Dans une première variante du deuxième mode de réalisation, montré sur les figures 14 et 15, les bras 131c ne passent pas dans des logements, mais sont soudés ou brasés directement à la surface du deuxième élément 12c, sur le côté intérieur 121 c.

Dans une deuxième variante du deuxième mode de réalisation, montré sur les figures 16 et 17, les bras 131 d sont soudés ou brasés directement à la surface du deuxième élément 12d, sur le côté extérieur 122d. Pour cela, la traverse 130d est plus longue, afin que les bras 131d puissent entourer le deuxième élément 12d. Les bras 131d sont pliés pour se placer côte à côte sur le côté extérieur 122d du deuxième élément 12d.

L'invention n'est pas limitée aux modes de réalisation qui viennent d'être décrits à titre d'exemple. Le premier élément pourrait être une partie de la branche 12 et le deuxième élément 12 le tenon 11. Les moyens d'accrochage pourrait être un perçage, en prévoyant que l'agrafe 13 puisse s'introduire dans ledit perçage jusqu'à la traverse 130. On peut prévoir d'autres méplats entre le chant d'appui 1120 et le bord d'extrémité 1121 pour fournir des positions d'équilibre intermédiaires.

L'agrafe pourrait n'avoir qu'un seul bras.

## Revendications

1. Charnière d'une monture de lunettes, la charnière (1) reliant une façade (2, 3) à une branche (4) et comportant un premier et un deuxième élément (11, 12) formant respectivement un tenon (11) et au moins une partie de la branche (12) ou inversement, **caractérisée en ce que** le premier élément (11) a une extrémité de la forme d'une lame (112) qui présente un chant d'appui (1120) et un bord d'extrémité (1121) orienté obliquement ou à angle droit par rapport au chant d'appui (1120), le premier élément (11) comportant en outre des moyens d'accrochage (113), le deuxième élément (12) comportant une rainure (123) dont la largeur est ajustée à l'épaisseur de la lame (112), la charnière (1) comportant en outre une agrafe (13) élastique, l'agrafe (13) comportant une traverse (130) se logeant dans les moyens d'accrochage (113) et en outre au moins un bras (131) ancré dans le deuxième élément (12), la traverse (130) tendant à plaquer le premier élément (11) dans la rainure (123), le premier élément (11) et le deuxième élément (12) étant aptes à pivoter l'un par rapport à l'autre entre une position d'ouverture dans laquelle le chant d'appui (1120) est plaqué dans la rainure (123) et une position de fermeture dans laquelle le bord d'extrémité (1121) est plaqué dans la rainure (123).

2. Charnière selon la revendication 1, dans laquelle les bras (131) de l'agrafe (13) sont au nombre de deux et forment un U avec la traverse (130), les bras (131) s'étendant de part et d'autre du premier élément (11).

3. Charnière selon la revendication 1 ou 2, dans laquelle au moins l'un des bras (131) comporte un retour (132) pour former une pince (134), le retour (132) s'étendant le long d'un côté extérieur (122) du deuxième élément (12) opposé à un côté intérieur (121) le long duquel le bras (131) s'étend.

4. Charnière selon la revendication 3, dans laquelle le deuxième élément (12) comporte un trou débouchant (124) dans lequel se loge un arc (133) réalisant la jonction entre le retour (132) et le bras (131).

5. Charnière selon les revendications 2 et 4 prises en combinaison, dans laquelle chaque bras (131) comporte un retour (132), le trou débouchant (124) étant commun pour les deux arcs (133).

6. Charnière selon les revendications 2 et 4 prises en combinaison, dans laquelle chaque bras (131) comporte un retour (132), le deuxième élément (12) comportant deux trous débouchants (124) distincts pour le passage des arcs (133) respectifs.

7. Charnière selon l'une des revendications 3 à 6, dans laquelle le deuxième élément (12) comporte une saignée (125) sur le côté extérieur (122) dans laquelle le retour (132) est logé au moins partiellement.

8. Charnière selon les revendications 5 et 7 prises en combinaison, dans laquelle les retours (132) des deux bras (131) se logent dans la même saignée (125).

9. Charnière selon les revendications 6 et 7 prises en combinaison, dans laquelle le deuxième élément (12) comporte deux saignées (125) distinctes pour recevoir respectivement les retours (132) des deux bras (131).

10. Charnière selon la revendication 1 ou 2, dans laquelle le bras (131b) s'étend dans un logement (126) longitudinal du deuxième élément (12b).

11. Charnière selon la revendication 10, dans laquelle le bras (131b) est fixé dans le logement (126) par brasure, soudure, collage ou sertissage.

12. Charnière selon l'une des revendications précédentes, dans laquelle les moyens d'accrochage comprennent une encoche (113) débouchant à l'opposé du chant d'appui (1120).

13. Charnière selon l'une des revendications précédentes, dans laquelle l'agrafe (13) est réalisée par un fil de section constante.

14. Charnière selon la revendication 13, dans laquelle la section du fil est circulaire, polygonale, carrée, oblongue ou elliptique.
